# EUROPÄISCHE PATENTSCHRIFT

(11) **EP 1 495 974 B1**
(45) Veröffentlichungstag und Bekanntmachung des Hinweises auf die Patenterteilung: **10.10.2007**
(21) Anmeldenummer: 04015018.7
(22) Anmeldetag: 25.06.2004
(51) Int. Cl.: B65B 51/30

(54) **Vorrichtung zum Verschweissen eines Folienschlauches**
Apparatus for sealing bag-type packages
Dispositif pour le soudage des emballages flexibles

(30) Priorität: 11.07.2003 DE 10331360
(43) Veröffentlichungstag der Anmeldung: 12.01.2005
(73) Patentinhaber: ROVEMA VERPACKUNGSMASCHINEN GMBH, 35463 Fernwald (DE)
(72) Erfinder: Kammler, Roman, Dr., 67547 Worms (DE); Bardtke, Ralf, 35232 Dautphetal (DE); Baur, Walter, Dr., 63584 Gründau (DE)

(56) Entgegenhaltungen:
- DE-A- 19 627 892
- GB-A- 1 297 000

## Beschreibung

Gegenstand der Patentanmeldung ist eine Vorrichtung zum Verschweißen eines Folienschlauches zu Verpackungszwecken.

Es sind vertikale Schlauchbeutelmaschinen bekannt, mit denen kopf- und bodenseitig verschweißte, befüllte Schlauchbeutel hergestellt werden. Dazu wird ein Folienschlauch zunächst längs verschweißt. Dann erfolgt eine Befüllung des Folienschlauches, seine Verschweißung quer zu seiner Transportrichtung und ein Abtrennen eines fertiggestellten Schlauchbeutels vom Folienschlauch.

Es sind unterschiedlichste Antriebe und Getriebe zum Betreiben der Schweißbacken bekannt, welche die Querverschweißung des Folienschlauches ausführen, um die Kopfund Bodennähte der Schlauchbeutel zu erzeugen.

Aus der DE 196 27 892 A1 ist eine Vorrichtung gemäß dem Oberbegriff des Anspruchs 1 bekannt, die für diese Querverschweißung geeignet ist.

Bei dieser bekannten Vorrichtung wird der Folienschlauch mittels zweier gegeneinander bewegbaren, den Folienschlauch zwischen sich einklemmenden Schweißbacken verschweißt. Jeweils ein Backenhalter dient dabei zum Halten einer Schweißbacke und jeweils ein Backenträger zum Tragen eines Backenhalters und damit einer Schweißbacke. Als Antrieb ist ein Linearantrieb mit einem entlang einer Wirklinie linear beweglichen Teil vorgesehen. Mit dem beweglichen Teil ist ein Getriebe verbunden, wobei das Getriebe auch mit den Backenträgem verbunden ist, um eine gegenläufige Bewegung der Backenträger und damit der Schweißbacken zu erzeugen, um die Schweißbacken aufeinander zu und voneinander weg bewegen zu können.

Die bekannte Vorrichtung hat den Nachteil, dass die Backenbewegung, d. h. das Weg-Zeit-Diagramm für die Schweißbacken, kaum vom Getriebe vorgegeben werden kann. Bei dieser Vorrichtung ist jeweils ein Gelenk an den Backenträgern vorgesehen, um Stangen des Getriebes schwenkbar mit den Backenträgern zu verbinden. Die Stangen übertragen dabei die Linearbewegung des Antriebs auf die Backenträger. Eine relativ komplizierte Schweißbackenbewegung in horizontaler Richtung, wie sie für Backenstöcke an vertikalen Schlauchbeutelmaschinen verlangt wird, um bei einer zusätzlichen Vertikalbewegung eine optimale Raumkurve für eine Schweißbacke zu erreichen, ist hierbei ohne Steuereinrichtung nicht gut möglich.

Der Erfindung liegt die Aufgabe zu Grunde, eine Vorrichtung der eingangs beschriebenen Art dahingehend weiterzubilden, dass das Getriebe eine komplizierte Backenbewegung in horizontaler Richtung vorgeben kann.

Gelöst ist die Aufgabe gemäß dem kennzeichnenden Teil des Anspruchs 1. Danach enthält das Getriebe eine mit dem beweglichen Teil verbundene Kurvenplatte, weist die Kurvenplatte zwei separate Kurvenlinien auf, und wird jeweils ein mit einem Backenträger verbundener Nocken entlang einer Kurvenlinie geführt.

Die vorgeschlagene Vorrichtung hat den Vorteil, dass das Getriebe eine relativ komplizierte Ort-Zeit-Funktion für eine Schweißbacke vorgeben kann. Ein in einer x-Richtung vorgegebener Backenpunkt wird zu einem bestimmten Zeitpunkt erreicht, wenn der Linearantrieb in herkömmlicher Weise betrieben wird, da die entsprechende Kurvenlinie den Backenträger und damit die starr mit dem Backenträger verbundene Schweißbacke zeitgenau auf diese Koordinate setzt. Dabei kann eine Kurvenlinie nahezu beliebig ausgestaltet sein, um z. B. eine Schweißdauer vorzugeben, eine Backenöffnungsweite zu begrenzen, oder ein möglichst schnelles Backenschließen zu erlauben.

Weitere, vorteilhafte Ausgestaltungen der Erfindung sind in den Ansprüchen 2 bis 9 beschrieben.

Eine reibungsarme Führung eines Nockens entlang einer Kurvenlinie ist erreicht, wenn gemäß Anspruch 2 der Nocken als Rolle zum Abrollen entlang der Kurvenlinie ausgestaltet ist. Dann rollt der Nocken an der Kurvenlinie ab und gibt derart eine Backenbewegung vor. Dazu eignet sich insbesondere eine geschlossene Kurvenlinie (Anspruch 4).

Sind analog Anspruch 3 die Kurvenlinien gleichartig, vorzugsweise spiegelsymmetrisch zueinander mit der Wirklinie als Symmetrieachse, ausgebildet, so treffen die Schweißbacken mittig am Folienschlauchdurchmesser auf, wenn sie zuvor jeweils einen gleichen Abstand zu dieser Mittellinie hatten, was zu geringen tangentialen Zugkräften am Folienschlauch führt und damit zu einem guten Schweißergebnis.

Erstreckt sich die Ebene der Kurvenplatte, d. h. ihre Ausrichtung, parallel zur Ebene der Vorrichtung, d. h. also in horizontaler Richtung (Anspruch 9), so kann die Vorrichtung relativ niedrig gebaut werden. Das bewegliche Teil kann in der Ebene des relativ ebenen Getriebes oder um eine geringe Distanz parallel dazu versetzt wirken. Es sind folglich Ausgestaltungen möglich, die nur ca. 200 mm Bauhöhe aufweisen. Darüber hinaus sind aber auch höhere Bauweisen denkbar, welche bei zur Verfügung stehenden, relativ hohem Raum genutzt werden könnten.

Eine Backenbewegung kann verändert werden, indem man eine Kurvenplatte gegen eine Kurvenplatte, welche anders ausgebildete Kurvenlinien enthält, austauscht (Anspruch 5).

Die durch die Geometrie der Kurvenlinien vorgegebenen Bahnkurven können auch verändert werden, wenn eine Steuereinrichtung vorgesehen ist, um die Bewegung des beweglichen Teils zeitabhängig zu steuern (Anspruch 6). Den Bahnkurven in einem Ort-Zeit-Diagramm wird dann zusätzlich eine Zeitkomponente überlagert. Derart können z. B. ebenfalls der Schweißvorgang verlängert und die Backenöffnungsweite reduziert werden, um eine sichere und relativ schnelle Beutelherstellung zu erreichen. Derart wird ein Wechseln einer Kurvenplatte nicht mehr oder nur noch selten notwendig.

Sind die Backenträger über jeweils zwei in Führungen geführten starren Verbindungen mit den Backenhaltern verbunden (Anspruch 8), so ist eine sehr stabile, verwindungssichere Ausgestaltung der relativ planen Vorrichtung erreicht.

Ist gemäß Anspruch 7 der Linearantrieb als Linearmotor, welcher nach einem Schwebebahnprinzip funktioniert, ausgestaltet, so sind sehr schnelle und ortsgenau ansteuerbare Backenbewegungen erreichbar. Dieser elektromagnetische Linearantrieb hat zudem den Vorteil, dass ein relativ hoher Siegeldruck von ca. 5 bis 8 kN erreicht wird. Eine genaue Druckeinstellung ist dabei durch eine Begrenzung der Leistungsaufnahme des Linearmotors möglich.

Im folgenden wird die Erfindung an Hand einer Figur, die ein Ausführungsbeispiel darstellt, näher beschrieben. Es zeigt:

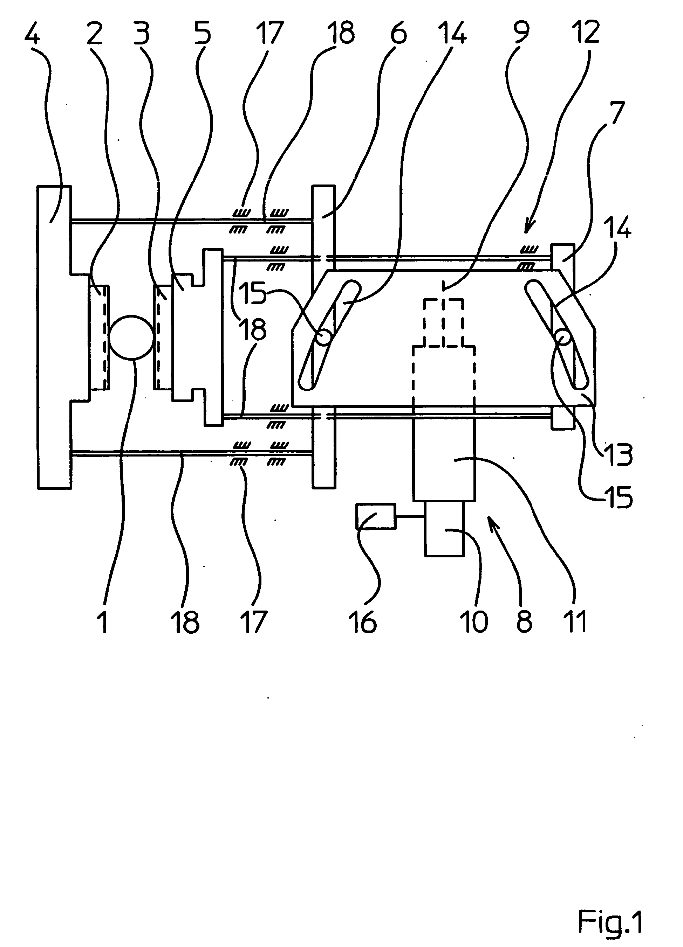

- Figur 1: in einer Ansicht von oben eine Vorrichtung zum Verschweißen eines (horizontal geschnittenen) Folienschlauches, bei der ein Linearmotor mit einem eine Kurvenplatte aufweisendem Getriebe dazu genutzt wird, Schweißbacken gegen den Folienschlauch zu bewegen, um diesen quer zu seiner Transportrichtung zu verschweißen.

Bei einer Vorrichtung zum Verschweißen eines Folienschlauches 1 erfolgt diese Verschweißung mittels zweier gegeneinander bewegbarer, den Folienschlauch 1 zwischen sich einklemmender Schweißbacken 2, 3 (Figur 1). Zwei Backenhalter 4, 5 dienen zum Halten jeweils einer Schweißbacke 2, 3 und jeweils ein Backenträger 6, 7 dient zum Tragen eines Backenhalters 4, 5 und damit der Schweißbacken 2,3. Die Backenträger 6, 7 sind über jeweils zwei in Führungen 17 geführten starren Verbindungen 18 mit den Backenhaltern 5, 6 verbunden. Dabei stecken zwei Verbindungen 18 in gleitender Weise in zwei Aussparungen des Backenträgers 6. Als Antrieb für die Backenbewegung dient ein Linearantrieb 8 mit einem entlang einer Wirklinie 9 und eines ortsfesten Teils 10 linear beweglichen Teil 11. Das bewegliche Teil 11 ist mit dem Getriebe 12 verbunden. Ebenso ist das Getriebe 12 mit den Backenträgem 6, 7 verbunden, um eine gegenläufige Bewegung der Backenträger 6, 7 und damit der Schweißbacken 2, 3 zu erzeugen, und um die Schweißbacken 2, 3 aufeinander zu und voneinander weg bewegen zu können.

Das Getriebe 12 enthält eine mit dem beweglichen Teil 11 verbundene Kurvenplatte 13. Die Kurvenplatte 13 weist zwei separate, geschlossene Kurvenlinien 14 auf. Jeweils ein mit einem Backenträger 6, 7 verbundener Nocken 15 wird entlang einer Kurvenlinie 14 geführt. Die Nocken 15 sind als Rollen ausgeführt und rollen entlang der Kurvenlinien 14 ab. Die Kurvenlinien 14 sind spiegelsymmetrisch zueinander mit der Wirklinie 9 als Symmetrieachse ausgebildet und führen derart zu einer gleichmäßigen Bewegung der Schweißbacken 2, 3 aufeinander zu bzw. voneinander weg. Dazwischen erfolgt eine Querverschweißung des Folienschlauches 1. Die Kurvenplatte 13 ist austauschbar, so dass bei gleichartigem Betrieb des Linearantriebs 8 eine geänderte Backenbewegung erzielt werden könnte.

Eine Steuereinrichtung 16 ist dazu vorgesehen, um die Bewegung des beweglichen Teils 11 zusätzlich zeitabhängig zu steuern und um derart eine relativ lange Schweißdauer und ein schnelles Backenöffnen sowie Backenschließen zu erreichen. Um diese sehr schnelle Backenbewegung zu realisieren, ist zudem der Linearantrieb 8 als Linearmotor, welcher nach einem Schwebebahnprinzip funktioniert, ausgestaltet.

Die in Figur 1 dargestellte Vorrichtung erstreckt sich mit seiner horizontal ausgerichteten Kurvenplatte 13 vornehmlich in horizontaler Richtung und weist somit in vertikaler Richtung eine sehr geringe Bauhöhe auf, wodurch eine entsprechende vertikale Schlauchbeutelmaschine, die diese Vorrichtung enthält, diesen Vorteil erfährt.
- 1: Folienschlauch
- 2, 3: Schweißbacke
- 4, 5: Backenhalter
- 6, 7: Backenträger
- 8: Linearantrieb
- 9: Wirklinie
- 10: ortsfestes Teil
- 11: bewegliches Teil
- 12: Getriebe
- 13: Kurvenplatte
- 14: Kurvenlinie
- 15: Nocken
- 16: Steuereinrichtung
- 17: Führung
- 18: starre Verbindung

## Patentansprüche

1. Vorrichtung zum Verschweißen eines Folienschlauches (1), mit zwei gegeneinander bewegbaren, den Folienschlauch (1) zwischen sich einklemmenden Schweißbacken (2, 3), zwei Backenhaltem (4, 5) zum Halten jeweils einer Schweißbacke (2, 3), jeweils einen Backenträger (6, 7) zum Tragen der Backenhalter (4, 5) und damit der Schweißbacken (2, 3), einem Linearantrieb (8) mit einem entlang einer Wirklinie (9) und eines ortsfesten Teils (10) linear beweglichen Teil (11), einem mit dem beweglichen Teil (11) verbundenen Getriebe (12), wobei das Getriebe (12) mit den Backenträgern (6, 7) verbunden ist, um eine gegenläufige Bewegung der Backenträger (6, 7) und damit der Schweißbacken (2, 3) zu erzeugen, und um die Schweißbacken (2, 3) aufeinander zu und voneinander weg bewegen zu können, **dadurch gekennzeichnet, dass** das Getriebe (12) eine mit dem beweglichen Teil (11) verbundene Kurvenplatte (13) enthält, dass die Kurvenplatte (13) zwei separate Kurvenlinien (14) aufweist, und dass jeweils ein mit einem Backenträger (6, 7) verbundener Nocken (15) entlang einer Kurvenlinie (14) geführt wird.

2. Vorrichtung nach Anspruch 1, **dadurch gekennzeichnet, dass** der Nocken (15) als Rolle zum Abrollen entlang der Kurvenlinie (14) ausgestaltet ist.

3. Vorrichtung nach Anspruch 1 oder Anspruch 2, **dadurch gekennzeichnet, dass** die Kurvenlinien (14) gleichartig, vorzugsweise spiegelsymmetrisch zueinander mit der Wirklinie (9) als Symmetrieachse, ausgebildet sind.

4. Vorrichtung nach Anspruch 3, **dadurch gekennzeichnet, dass** die Kurvenlinien (14) geschlossen sind.

5. Vorrichtung nach einem der Ansprüche 1 bis 4, **dadurch gekennzeichnet, dass** die Kurvenplatte (13) austauschbar ist.

6. Vorrichtung nach einem der Ansprüche 1 bis 5, **dadurch gekennzeichnet, dass** eine Steuereinrichtung (16) vorgesehen ist, um die Bewegung des beweglichen Teils (11) zeitabhängig zu steuern.

7. Vorrichtung nach einem der Ansprüche 1 bis 6, **dadurch gekennzeichnet, dass** der Linearantrieb (8) als Linearmotor, welcher nach einem Schwebebahnprinzip funktioniert, ausgestaltet ist.

8. Vorrichtung nach einem der Ansprüche 1 bis 7, **dadurch gekennzeichnet, dass** die Backenträger (6, 7) über jeweils zwei in Führungen (17) geführten starren Verbindungen (18) mit den Backenhaltern (5, 6) verbunden sind.

9. Vorrichtung nach einem der Ansprüche 1 bis 8, **dadurch gekennzeichnet, dass** sich die Ebene der Kurvenplatte (13) parallel zur Ebene der Vorrichtung erstreckt.

## Claims

1. An apparatus for welding a film tubing (1), with two welding jaws (2, 3) movable with respect to each other and clamping the film tubing (1) between themselves, two jaw holders (4, 5) for holding one welding jaw (2, 3) in each case, one jaw carrier (6, 7) in each case for carrying the jaw holders (4, 5) and thus the welding jaws (2, 3), a linear drive (8) with a part (11) movable in a linear manner along a line of force (9) and a stationary part (10), and a gear mechanism (12) connected to the movable part (11), wherein the gear mechanism (12) is connected to the jaw carriers (6, 7) in order to produce an opposite movement of the jaw carriers (6, 7) and thus of the welding jaws (2, 3), and in order to be able to move the welding jaws (2, 3) towards each other and away from each other, **characterized in that** the gear mechanism (12) contains a cam plate (13) connected to the movable part (11), the cam plate (13) has two separate curved lines (14), and one cam (15) connected to a jaw carrier (6, 7) is guided along a curved line (14) in each case.

2. An apparatus according to Claim 1, **characterized in that** the cam (15) is constructed in the form of a roll for rolling along the curved line (14).

3. An apparatus according to Claim 1 or Claim 2, **characterized in that** the curved lines (14) are constructed in the same manner, preferably in a mirror-symmetrical manner with respect to each other with the line of force (9) as the axis of symmetry.

4. An apparatus according to Claim 3, **characterized in that** the curved lines (14) are closed.

5. An apparatus according to any one of Claims 1 to 4, **characterized in that** the cam plate (13) is interchangeable.

6. An apparatus according to any one of Claims 1 to 5, **characterized in that** a control device (16) is provided in order to control the movement of the movable part (11) in a manner dependent upon time.

7. An apparatus according to any one of Claims 1 to 6, **characterized in that** the linear drive (8) is constructed in the form of a linear motor which operates in accordance with the principle of a suspension railway.

8. An apparatus according to any one of Claims 1 to 7, **characterized in that** the jaw carriers (6, 7) are connected to the jaw holders (4, 5) by way of two rigid connexions (18) guided in guides (17) in each case.

9. An apparatus according to any one of Claims 1 to 8, **characterized in that** the plane of the cam plate (13) extends parallel to the plane of the apparatus.

## Revendications

1. Dispositif pour souder un tube en film (1), avec deux mâchoires de soudure (2, 3) mobiles l'une par rapport à l'autre, entre lesquelles le tube en film est pincé, deux portes-mâchoire (4, 5) pour porter chacun une mâchoire (2, 3), deux rapports de mâchoires (6, 7) pour supporter les portes-mâchoires (4, 5) et ainsi les mâchoires de soudure (2, 3), un entraînement linéaire (8) comportant une partie (11) mobile linéairement le long d'une ligne d'effet (9) et une pièce fixe (10), une transmission (12) en liaison avec la partie mobile (11), la transmission (12) étant reliée aux supports de mâchoires (6, 7) afin de créer un mouvement alternatif des supports de mâchoire (6, 7) et ainsi des mâchoires de soudure (2, 3) et pour pouvoir déplacer les mâchoires de soudure (2, 3) l'une vers l'autre et l'une à l'opposé de l'autre **caractérisé en ce que** la transmission (12) comporte une plaque à courbes de came (13), que la plaque à courbes de came (13) présente deux courbes de came séparées (14) et **en ce que** respectivement un téton de came (15) solidaire d'un support de mâchoire (6, 7) est guidé sur chaque courbe de came (14) respective.

2. Dispositif selon la revendication 1 **caractérisé en ce que** le téton de came (15) est conformé en galet pour rouler le long de la courbe de came (14).

3. Dispositif selon la revendication 1 ou la revendication 2, **caractérisé en ce que** les courbes de came (14) sont conçues de façon identique, de préférence avec une symétrie spéculaire, avec la ligne d'effet (9) comme axe de symétrie.

4. Dispositif selon la revendication 3 **caractérisé en ce que** les courbes de came (14) sont formées.

5. Dispositif selon l'une des revendications 1 à 4 **caractérisé en ce que** la plaque à courbes de came (13) est échangeable.

6. Dispositif selon l'une des revendications 1 à 5 **caractérisé en ce qu'**un dispositif de commande (16) est prévu afin de commander le mouvement de la partie mobile (11) en fonction du temps.

7. Dispositif selon l'une des revendications 1 à 6 **caractérisé en ce que** l'entraînement linéaire (8) est conformé en moteur linéaire qui fonctionne selon un principe d'un train suspendu.

8. Dispositif selon l'une des revendications 1 à 7 **caractérisé en ce que** les supports de mâchoire (6, 7) sont reliés aux portes-mâchoires (4, 5) par deux liaisons rigides (18) guidées dans des guides (17).

9. Dispositif selon l'une des revendications 1 à 8 **caractérisé en ce que** le plan de la plaque à courbes de came (13) s'étend parallèlement à celui du dispositif.
